# EUROPÄISCHE PATENTANMELDUNG

(11) **EP 4 113 827 A1**
(43) Veröffentlichungstag der Anmeldung: **04.01.2023**
(21) Anmeldenummer: 21183214.2
(22) Anmeldetag: 01.07.2021
(51) Int. Cl.: H02P 29/66, H02P 23/14

(54) **TEMPERATURBESTIMMUNGSVERFAHREN FÜR MAGNETTEMPERATUREN AN MAGNETEN ELEKTRISCHER MOTOREN**

(71) Anmelder: Siemens Aktiengesellschaft, 80333 München (DE)
(72) Erfinder: Fritsch, Christoph, 96178 Pommersfelden (DE); Künzel, Stefan, 91056 Erlangen (DE)

(57) **Zusammenfassung**

Die Erfindung betrifft ein Temperaturbestimmungsverfahren (1) für Magnettemperaturen an Magneten (2) elektrischer Motoren (3), mit Schritten in einem Testbetrieb (4): Anlegung (5) einer ersten Spannung (U₁) an mindestens eine Testwicklung (6) eines Testmotors (7) mit Testmagneten (11) zur Einprägung (8) einer ersten Spannungszeitfläche (9) bei ersten Winkeln (φ₁) eines Testmotordrehfelds (10), wobei die Testmagneten (11) mit zumindest einer vorgegebenen Magnettemperatur (T_{MV}) beaufschlagt sind, Ermittlung (12) erster Stromwerte (I₁) bei den ersten Winkeln (φ₁) und Speicherung (13) der ersten Stromwerte (I₁) in Abhängigkeit zu der zumindest einen vorgegebenen Magnettemperatur (T_{MV}), und mit Schritten in einem Normalbetrieb (14): weitere Anlegung (15) einer zweiten Spannung (U₂) an mindestens eine Motorwicklung (16) eines Einsatzmotors (17) mit Motormagneten (18) zur weiteren Einprägung (19) einer zweiten Spannungszeitfläche (20) bei zweiten Winkeln (φ₂) eines Motordrehfelds (26), wobei die Motormagneten (18) eine betriebsbedingte Magnettemperatur (T_{MN}) aufweisen, weitere Ermittlung (21) zweiter Stromwerte (I₂) bei den zweiten Winkeln (φ₂), weitere Speicherung (22) der zweiten Stromwerte (I₂) in Abhängigkeit zur betriebsbedingten Magnettemperatur (T_{MN}) und Temperaturbestimmung (23) der betriebsbedingten Magnettemperatur (T_{MN}) mittels Vergleichs (24) von zumindest einem der zweiten Stromwerte (I₂) der betriebsbedingten Magnettemperatur (T_{MN}) mit zumindest einem der ersten Stromwerte (I₁) der zumindest einen vorgegebenen Magnettemperatur (T_{MV}).

## Beschreibung

Die Erfindung betrifft ein Temperaturbestimmungsverfahren für Magnettemperaturen an Magneten elektrischer Motoren mit Schritten in einem Testbetrieb und mit Schritten in einem Normalbetrieb.

Die Magnettemperatur von elektrischen Motoren, wie insbesondere von Synchronmotoren, ist im bestimmungsgemäßen betrieblichen Einsatz bei den Anwendern, hier im weiteren als Normalbetrieb bezeichnet, meist unbekannt oder zumindest sehr ungenau.

In der Regel sind z.B. an den Rotoren der Synchronmaschine keine Temperatursensoren zur Messung oder Ermittlung der Motortemperatur angeordnet. Falls jedoch eine entsprechende Temperaturmessungen vorgesehen sein sollte, ist eine Implementierung derartiger Temperatursensoren auf dem Rotor des Motors schwierig realisierbar und daher im Allgemeinen auch mit hohen Kosten verbunden.

In vielen Industriebranchen, beispielsweise aber auch im Bereich der Herstellung und des Betriebs elektrischer Fahrzeuge, ist für den Einsatz geeigneter Antriebssysteme die Kenntnis der Magnettemperatur des elektrischen Motors durchaus notwendig, da die Motormagneten abhängig von deren Temperatur eine unterschiedliche Remanenz aufweisen und sich daher auch die Drehmomentkonstante in Abhängigkeit zur Magnettemperatur ändert. Kennt man die Magnettemperatur, kann die Drehmomentberechnung einfach adaptiert werden.

Gängige Verfahren zur Temperaturbestimmung arbeiten z.B. mit Auswertung der EMK (Elektromotorischen Kraft) bei einer entsprechenden Drehzahl (als EMK wird auch die durch Drehung des elektrischen Motors induzierte Spannung bezeichnet), wobei damit auf die am Motormagneten anstehende Magnettemperatur geschlussfolgert werden kann. Auch gibt es weitere bekannte Verfahren, wie das einer Feldstrom-Signaleinprägungen, mittels derer ebenfalls die am Motormagneten anstehende Magnettemperatur ermittelt werden kann.

Alle dies Verfahren setzen jedoch voraus, dass sich die elektrische Maschine in einem drehenden Zustand befindet und zudem die Rotorlage der elektrischen Maschine bekannt ist. Sie sind demnach in der Implementierung und der Anwendung nur aufwendig zu realisieren.

Der Erfindung liegt die Aufgabe zugrunde, ein gegenüber dem Stand der Technik verbessertes Temperaturbestimmungsverfahren für Magnettemperaturen an Magneten elektrischer Motoren vorzuschlagen, welches den Aufwand bei der Implementierung und der Anwendung zur Bestimmung der Magnettemperatur reduziert.

Die Aufgabe wird durch ein Temperaturbestimmungsverfahren mit den in Anspruch 1 angegebenen Merkmalen gelöst.

Für die Lösung der Aufgabe wird ein Temperaturbestimmungsverfahren für Magnettemperaturen an Magneten elektrischer Motoren vorgeschlagen, mit Schritten in einem Testbetrieb: Anlegung einer ersten Spannung an mindestens eine Testwicklung eines Testmotors mit Testmagneten zur Einprägung einer ersten Spannungszeitfläche bei ersten Winkeln eines Testmotordrehfelds, wobei die Testmagneten mit zumindest einer vorgegebenen Magnettemperatur beaufschlagt sind, Ermittlung erster Stromwerte bei den Testwinkeln und Speicherung der ersten Stromwerte in Abhängigkeit zu der zumindest einen vorgegebenen Magnettemperatur, und mit Schritten in einem Normalbetrieb: weitere Anlegung einer zweiten Spannung an mindestens eine Motorwicklung eines Einsatzmotors mit Motormagneten zur weiteren Einprägung einer zweiten Spannungszeitfläche bei zweiten Winkeln eines Motordrehfelds, wobei die Motormagneten eine betriebsbedingte Magnettemperatur aufweisen, weitere Ermittlung zweiter Stromwerte bei den zweiten Winkeln, weitere Speicherung der zweiten Stromwerte in Abhängigkeit zur betriebsbedingten Magnettemperatur und Temperaturbestimmung der betriebsbedingten Magnettemperatur mittels Vergleichs von zumindest einem der zweiten Stromwerte der betriebsbedingten Magnettemperatur mit zumindest einem der ersten Stromwerte der zumindest einen vorgegebenen Magnettemperatur.

Aufgrund der Sättigung im Eisen bzw. der induktiven Sättigung, sind Ströme, die in Wicklungen elektrischer Motoren in Magnetfeldrichtung fließen, also in Richtung zu den am elektrischen Motor angeordneten Magneten, größer als Ströme mit geringerer Ausrichtung zum Magnetfeld der Magneten bei der Einprägung von Spannungszeitflächen. Diese elektrische Beziehung macht es möglich, dass beispielsweise der Rotorlagewinkel des elektrischen Motors bestimmt werden kann.

Die Höhe der ermittelten Stromwerte ist von der Induktivität der Wicklung des elektrischen Motors in Verbindung mit dem Winkel des Drehfelds des elektrischen Motors abhängig. Falls der Testmotor baulich keine Veränderungen zu dem Einsatzmotor aufweist, ist die Höhe der in den Wicklungen des Testmotors und des Einsatzmotors maximal fließenden Ströme proportional zu den in die Testwicklung des Testmotors oder die Motorwicklung des Einsatzmotors eingeprägten Spannungszeitflächen und proportional zur Magnetfeldstärke der Testmagnete des Testmotors oder der Motormagnete des Einsatzmotors.

Das heißt, dass sich bei z.B. gleich eingeprägten Spannungszeitflächen die ermittelten maximalen Stromwerte bzw. die ermittelten Ströme bei den Winkeln nur noch in Abhängigkeit der Magnetfeldstärke, welche die Sättigung erzeugt, ändern. Die Magnetfeldstärke ist umgekehrt proportional zur Temperatur.

Das Temperaturbestimmungsverfahren wird mittels eines Testbetriebs und eines Normalbetriebs durchgeführt.

Der Testbetrieb wird üblicherweise in einer Testumgebung durchgeführt, welche meist nicht einem anwenderbezogenen Einsatzort entspricht. Jedoch umfasst ein derartiger Testbetrieb auch weitere Betriebsarten wie eine Inbetriebsetzung eines Antriebssystems oder einen Fehlersuchbetrieb. Der Testmotor repräsentiert dabei üblicherweise eine Motorbaureihe.

Im Normalbetrieb werden in der Regel Einsatzmotoren der Motorbaureihe anwendungsspezifisch betrieben. Somit werden im Normalbetrieb der oder die Einsatzmotoren beim Anwender bestimmungsgemäß benutzt. Testmotor und Einsatzmotor stammen vorteilhaft von einer Motorbaureihe ab, obwohl diese Motoren auch Unterschiede beispielsweise im konstruktiven Aufbau und der elektrischen Bemessung haben können.

Im Testbetrieb werden die Testmagneten an dem Testmotor einer Motorbaureihe bevorzugt mit verschiedenen vorgegebenen Magnettemperaturen beaufschlagt. Beaufschlagt bedeutet, dass die Testmagneten des Testmotors die beaufschlagte Magnettemperatur für den Testbetrieb annehmen.

Je nach Ausbildung des Testmotors, ein- oder mehrphasig, wird die erste Spannung an die mindestens eine Testwicklung des Testmotors zum Einprägen der ersten Spannungszeitfläche angelegt. Dies erfolgt bei ausgewählten ersten Winkeln eines Testmotordrehfelds des Testmotors, wobei sich die ersten Winkel über einen Winkelbereich erstrecken, der vorteilhaft 360° umfasst. Das Testmotordrehfeld des Testmotors ist ein elektrisches Drehfeld, wie es beispielsweise aus einer Raumzeigermodulation einer Vektorreglung zum Betrieb von elektrischen Motoren als statorfestes elektrisches Drehfeld bekannt ist.

Die erste Spannungszeitfläche wird derart gebildet, indem die erste Spannung über eine vorgegebene Zeit in einer vorgegebenen Höhe an die mindestens eine Testwicklung des Testmotors angelegt wird.

In der mindestens einen Testwicklung wird durch wiederholtes Einprägen der ersten Spannungszeitflächen bei den ersten Winkeln jeweils ein Stromfluss erzeugt, der als erster Stromwert ermittelt und auf einem ersten Speichermedium in Abhängigkeit zur vorgegebenen Magnettemperatur gespeichert werden.

Die Ermittlung des ersten Stromwerts kann derart erfolgen, dass der erste Stromwert z.B. an der mindestens einen Testwicklung des Testmotors gemessen wird oder rechnerisch durch weitere an dem Testmotor bestimmbarer elektrischer Größen ermittelt wird. Dies und weitere Aktivitäten zum Betrieb des Testmotors können mittels eines elektrischen Umrichters mit einer entsprechenden Steuerung- und Reglungseinheit erfolgen.

Im Normalbetrieb stellt sich für die Motormagneten des Einsatzmotors der Motorbaureihe die betriebsbedingte Magnettemperatur ein. Diese anfangs unbekannte betriebsbedingte Magnettemperatur wird nunmehr in vorteilhafter Art im Normalbetrieb durch das Temperaturermittlungsverfahren ermittelt, wobei die im Testbetrieb für die gemeinsame Motorbaureihe ermittelten und gespeicherten ersten Stromwerte in Abhängigkeit zur vorgegebenen Magnettemperatur benutzt werden.

Je nach Ausbildung des Einsatzmotors, ein- oder mehrphasig, wird die zweite Spannung an die mindestens eine Motorwicklung des Testmotors zum Einprägen der zweiten Spannungszeitfläche angelegt. Dies erfolgt bei ausgewählten zweiten Winkeln eines Motordrehfelds des Einsatzmotors, wobei sich die zweiten Winkel über den Winkelbereich erstrecken. Das Motordrehfeld des Einsatzmotors ist wie beim Testmotor ein elektrisches Drehfeld, wie es beispielsweise aus der Raumzeigermodulation der Vektorreglung zum Betrieb von elektrischen Motoren als statorfestes elektrisches Drehfeld bekannt ist.

Die zweite Spannungszeitfläche wird derart gebildet, indem die zweite Spannung über eine vorgegebene Zeit in einer vorgegebenen Höhe an die mindestens eine Motorwicklung des Einsatzmotors angelegt wird.

In der mindestens einen Motorwicklung wird durch wiederholtes Einprägen der zweiten Spannungszeitflächen bei den zweiten Winkeln jeweils ein Stromfluss erzeugt, der als zweiter Stromwert ermittelt und auf einem zweiten Speichermedium in Abhängigkeit zur betriebsbedingten Magnettemperatur gespeichert wird.

Die Ermittlung des zweiten Stromwerts kann derart erfolgen, dass der zweite Stromwert z.B. an der mindestens einen Motorwicklung des Einsatzmotors gemessen wird oder rechnerisch durch weitere an dem Einsatzmotor bestimmbare elektrische Größen ermittelt wird. Dies und weitere Aktivitäten zum Betrieb des Einsatzmotors können mittels eines elektrischen Umrichters mit einer entsprechenden Steuerung- und/oder Reglungseinheit erfolgen.

Grundsätzlich ist es vorteilhaft, dass das Temperaturbestimmungsverfahren, oder zumindest Teile davon, mittels einer Prozessoreinheit beispielsweise eines elektrischen Umrichters durchgeführt wird.

Vorteilhafte Ausgestaltungsformen des Ladestromverfahrens sind in den abhängigen Ansprüchen angegeben.

Bei einer ersten vorteilhafte Ausgestaltungsform des Temperaturbestimmungsverfahrens wird aus den ersten Stromwerten für die mindestens eine vorgegebene Magnettemperatur ein erster maximaler Stromwert ermittelt und gespeichert, wird aus den zweiten Stromwerten für die betriebsbedingte Magnettemperatur ein zweiter maximaler Stromwert ermittelt und gespeichert und erfolgt die Temperaturbestimmung der betriebsbedingten Magnettemperatur mittels Vergleichs des zweiten maximalen Stromwerts der betriebsbedingten Magnettemperatur mit dem ersten maximalen Stromwert der zumindest einen vorgegebenen Magnettemperatur.

Die Temperaturbestimmung der betriebsbedingten Magnettemperatur erfolgt nun mittels Vergleichs von zumindest einem der gespeicherten zweiten Stromwerte der betriebsbedingten Magnettemperatur mit zumindest einem der gespeicherten ersten Stromwerte der zumindest einen vorgegebenen Magnettemperatur.

Bei einer weiteren vorteilhafte Ausgestaltungsform des Temperaturbestimmungsverfahrens ist die betriebsbedingte Magnettemperatur gleich der mindestens einen vorgegebenen Magnettemperatur, wenn der zweite maximale Stromwert gleich dem ersten maximalen Stromwert ist.

Bei dieser vorteilhaften Ausgestaltung ist die betriebsbedingte Magnettemperatur exakt bestimmbar.

Bei einer weiteren vorteilhafte Ausgestaltungsform des Temperaturbestimmungsverfahrens wird die betriebsbedingte Magnettemperatur zu der mindestens einen vorgegebenen Magnettemperatur abgeschätzt, wenn der zweite maximale Stromwert ungleich dem ersten maximalen Stromwert ist.

Diese Abschätzung erfolgt vorteilhaft z.B. auf Basis der Höhe des zweiten Stromwerts in Bezug zu dem ersten Stromwert und dies ggf. noch unter Kenntnis eines maximal zulässigen Stromwerts für die Motoren der Motobaureihe.

Bei einer weiteren vorteilhafte Ausgestaltungsform des Temperaturbestimmungsverfahrens wird aus den jeweils ersten maximalen Stromwerten mehrerer vorgegebener Magnettemperaturen eine Kennlinie gebildet und erfolgt die Temperaturbestimmung der betriebsbedingten Magnettemperatur mittels Vergleichs des zweiten maximalen Stromwerts der betriebsbedingten Magnettemperatur mit den jeweils ersten maximalen Stromwerten der Kennlinie in Abhängigkeit zu den mehreren vorgegebenen Magnettemperaturen.

In die Kennlinie können erste maximale Stromwerte für die mehreren vorgegebenen Magnettemperaturen eingetragen werden. Ein ermittelter zweiter Stromwert kann dann an den ersten maximalen Stromwerten der Kennlinie gespiegelt werden, wobei über den Vergleich zu den ersten maximalen Stromwerten, und deren Verknüpfung zu den jeweiligen vorgegebene Magnettemperaturen, die betriebsbedingten Magnettemperatur in vorteilhafter Weise bestimmt wird.

Die Kennlinie ist dabei sehr breit ausgelegt zu verstehen, so dass z.B. auch Tabellen oder vergleichbare Datenformate, insbesondere auch in elektronischer Form, unter den Begriff der Kennlinie fallen. Auch kann die Kennlinie eine Kurvenform annehmen.

Bei einer weiteren vorteilhafte Ausgestaltungsform des Temperaturbestimmungsverfahrens, wobei die betriebsbedingte Magnettemperatur gleich einer der mehreren vorgegebenen Magnettemperaturen ist, wenn der zweite maximale Stromwert gleich einem der ersten maximalen Stromwert der Kennlinie in Abhängigkeit zu einer der mehreren vorgegebenen Magnettemperaturen ist.

Bei dieser vorteilhaften Ausgestaltung ist die betriebsbedingte Magnettemperatur exakt bestimmbar.

Bei einer weiteren vorteilhafte Ausgestaltungsform des Temperaturbestimmungsverfahrens wird die betriebsbedingte Magnettemperatur in Bezug zu einer Nächstliegenden der mehreren vorgegebenen Magnettemperaturen abgeschätzt, wenn der zweite maximale Stromwert ungleich zu den ersten maximalen Stromwerten der Kennlinie in Abhängigkeit zu den mehreren vorgegebenen Magnettemperaturen ist.

Diese Abschätzung kann beispielsweise vorteilhaft erfolgen, indem der zweite maximale Stromwert zwischen den bekannten ersten maximalen Stromwerten interpoliert wird.

Bei einer weiteren vorteilhafte Ausgestaltungsform des Temperaturbestimmungsverfahrens wird der Testbetrieb im Stillstand des Testmotors und der Normalbetrieb im Stillstand des Einsatzmotors durchgeführt.

Dieses Ausgestaltungsbeispiel ist besonders vorteilhaft, da insbesondere der ggf. schon in einer Anlage verbaute Einsatzmotor nicht gedreht werden muss, demnach eventuell eine an den Einsatzmotor angeschlossene Last nicht bewegt werden muss. Gleiches gilt analog auch für den Testbetrieb, so dass im Testbetrieb auch Betriebsgefahren, welche sonst beim Einsatz rotierender oder sich anders bewegender elektrischer Maschinen auftreten könnte, geringer sind. Grundsätzlich ist der Betriebsaufwand im Stillstand der Motoren geringer als bei rotierenden Motoren.

Auch benötigt das Temperaturbestimmungsverfahren - sowohl im Testbetrieb des Testmotors wie auch im Normalbetrieb des Einsatzmotors - keine Informationen über eine Rotorlage des jeweiligen Motors.

Bei einer weiteren vorteilhafte Ausgestaltungsform des Temperaturbestimmungsverfahrens sind die Testmagneten des Testmotors und die Motormagneten des Einsatzmotors als Permanentmagneten ausgebildet.

Der Einsatz von Permanentmagneten in beispielsweise Synchronmotoren bietet gegenüber Motoren mit einem fremderregt gebildeten Magneten sowohl aus konstruktiv baulicher Sicht - kleinerer Bauraum, weniger Motorkomponenten - wie auch aus elektrischer Sicht - keine separate Energie zur Erzeugung des Magnetfelds notwendig - Vorteile.

Bei einer weiteren vorteilhafte Ausgestaltungsform des Temperaturbestimmungsverfahrens ist die zweite Spannungszeitfläche im Normalbetrieb gleich der ersten Spannungszeitfläche im Testbetrieb ist.

Sind die eingeprägte erste und zweite Spannungszeitfläche zur Ausbildung und Ermittlung der ersten und zweiten Stromwerte im Testbetrieb versus Normalbetrieb gleich, wird die Genauigkeit zur Bestimmung der betriebsbedingten Magnettemperatur des Normalbetriebs vorteilhaft gesteigert gegenüber dem Einsatz mit verschiedenen ersten und zweiten Spannungszeitflächen.

Es bestehen demnach aus Sicht der eingeprägten Spannungszeitflächen die gleichen elektrischen Bedingungen.

Bei einer weiteren vorteilhafte Ausgestaltungsform des Temperaturbestimmungsverfahrens sind die ersten Winkel in Anzahl und jeweiligen Winkelwerten gleich den zweiten Winkeln.

Sind die ersten und zweiten Winkel für die Einprägung der Spannungszeitflächen in Anzahl und jeweiligen Winkelwerten zur Ausbildung und Ermittlung der ersten und zweiten Stromwerte im Testbetrieb versus Normalbetrieb gleich, wird die Genauigkeit zur Bestimmung der betriebsbedingten Magnettemperatur des Normalbetriebs vorteilhaft gesteigert gegenüber dem Einsatz mit einer unterschiedlichen Anzahl und unterschiedlichen jeweiligen Winkelwerten der ersten und zweiten Winkel.

Es bestehen demnach aus Sicht der Einprägung der Spannungszeitflächen bei den ersten und zweiten Winkeln die gleichen elektrischen Bedingungen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung des erfindungsgemäßen Temperaturbestimmungsverfahrens mittels eines Struktogramms,
- FIG 2: eine schematische Darstellung eines Motormodels für einen Testmotor im Testbetrieb und einen Einsatzmotor im Normalbetrieb für das erfindungsgemäße Temperaturbestimmungsverfahren gemäß FIG 1,
- FIG 3: ein schematisches Diagramm zur Ermittlung einer betriebsbedingten Magnettemperatur für das erfindungsgemäße Temperaturbestimmungsverfahren gemäß FIG 1 oder 2 und
- FIG 4: ein schematisches Diagramm mit einem im Normalbetrieb ermittelten Stromverlauf zweiter Stromwerte in Abhängigkeit von ermittelten betriebsbedingten Temperaturen.

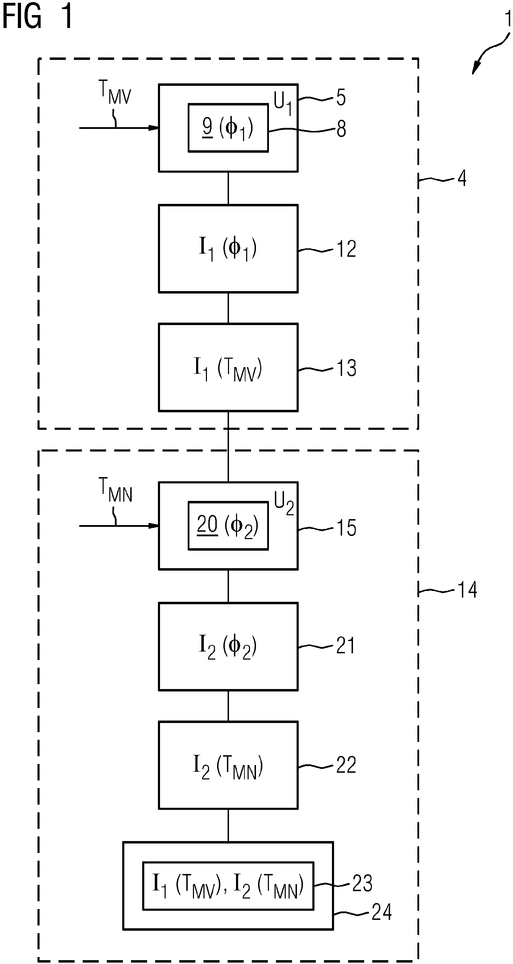

Die FIG 1 zeigt eine schematische Darstellung des erfindungsgemäßen Temperaturbestimmungsverfahrens 1 mittels eines Struktogramms.

Temperaturbestimmungsverfahren 1 findet Anwendung bei der Bestimmung von Magnettemperaturen an Magneten elektrischer Motoren.

In einem Testbetrieb 4 des Temperaturbestimmungsverfahrens 1 werden die nachfolgenden Schritte durchgeführt.

Mit Anlegung 5 einer ersten Spannung U₁ an mindestens eine Testwicklung eines Testmotors 7 mit Testmagneten 11 erfolgt eine Einprägung 8 einer ersten Spannungszeitfläche 9 bei ersten Winkeln φ₁ eines Testmotordrehfelds.

Die Testmagneten 11 sind dazu zumindest mit einer vorgegebenen Magnettemperatur T_{MV} beaufschlagt.

Eine Ermittlung 12 erster Stromwerte I₁ bei den ersten Winkeln φ₁ wird durchgeführt und es erfolgt eine Speicherung 13 der ersten Stromwerte I₁ in Abhängigkeit zu der zumindest einen vorgegebenen Magnettemperatur T_{MV}.

Die Schritte des Testbetriebs können dabei wiederholt werden, um für weitere vorgegebene Magnettemperatur T_{MV} entsprechende erste Stromwerte in Abhängigkeit zu den jeweiligen vorgegebenen Magnettemperatur T_{MV} zu ermitteln und zu speichern.

In einem Normalbetrieb 14 des Temperaturbestimmungsverfahrens 1 werden die nachfolgenden Schritte durchgeführt.

Mit einer weiteren Anlegung 15 einer zweiten Spannung U₂ an mindestens eine Motorwicklung eines Einsatzmotors mit Motormagneten 18 erfolgt eine weitere Einprägung 19 einer zweiten Spannungszeitfläche 20 bei zweiten Winkeln φ₂ eines Einsatzmotordrehfelds.

Die Motormagneten weisen hier eine betriebsbedingte Magnettemperatur T_{MN} auf, welche sich im Normalbetrieb 14 an den Motormagneten entsprechend einstellt.

Eine weitere Ermittlung 21 zweiter Stromwerte I₂ bei den zweiten Winkeln φ₂ wird durchgeführt und es erfolgt eine weitere Speicherung 22 der zweiten Stromwerte I₂ in Abhängigkeit zur betriebsbedingten Magnettemperatur T_{MN}.

Eine Temperaturbestimmung 23 der betriebsbedingten Magnettemperatur T_{MN} wird mittels eines Vergleichs 24 von zumindest einem der zweiten Stromwerte I₂ der betriebsbedingten Magnettemperatur T_{MN} mit zumindest einem der ersten Stromwerte I₁ der zumindest einen vorgegebenen Magnettemperatur T_{MV} durchgeführt.

Zur weiteren Ausbildung des Temperaturbestimmungsverfahrens 1 sind nachfolgend ergänzende Schritte aufgezeigt, welche nicht oder nicht vollständig in FIG 1 dargestellt sind.

Aus den ersten Stromwerten I₁ für die mindestens eine vorgegebene Magnettemperatur T_{MV} wird ein erster maximaler Stromwert ermittelt und gespeichert und aus den zweiten Stromwerten I₂ für die betriebsbedingte Magnettemperatur T_{MN} wird ein zweiter maximaler Stromwert ermittelt und gespeichert.

Im Fall der ermittelten maximalen Stromwerte erfolgt die Temperaturbestimmung 23 der betriebsbedingten Magnettemperatur T_{MN} mittels Vergleichs 24 des zweiten maximalen Stromwerts der betriebsbedingten Magnettemperatur T_{MN} mit dem ersten maximalen Stromwert der zumindest einen vorgegebenen Magnettemperatur T_{MV}.

Ist dazu der zweite maximale Stromwert ungleich dem ersten maximalen Stromwert wird die betriebsbedingte Magnettemperatur T_{MN} in Bezug zu der mindestens einen vorgegebenen Magnettemperatur T_{MV}.

Aus den jeweils ersten maximalen Stromwerten mehrerer vorgegebener Magnettemperaturen T_{MV} kann auch eine Kennlinie gebildet werden. Die Temperaturbestimmung 23 der betriebsbedingten Magnettemperatur T_{MN} erfolgt dann mittels Vergleichs 24 des zweiten maximalen Stromwerts der betriebsbedingten Magnettemperatur T_{MN} mit den jeweils ersten maximalen Stromwerten der Kennlinie in Abhängigkeit zu den mehreren vorgegebenen Magnettemperaturen T_{MV}.

Wenn an dieser Stelle der zweite maximale Stromwert ungleich zu den jeweils ersten maximalen Stromwerten der Kennlinie in Abhängigkeit zu den mehreren vorgegebenen Magnettemperaturen T_{MV} ist, wird die betriebsbedingte Magnettemperatur T_{MN} zu einer Nächstliegenden der mehreren vorgegebenen Magnettemperaturen T_{MV} abgeschätzt. Zur Abschätzung können Interpolationsverfahren zum Einsatz kommen.

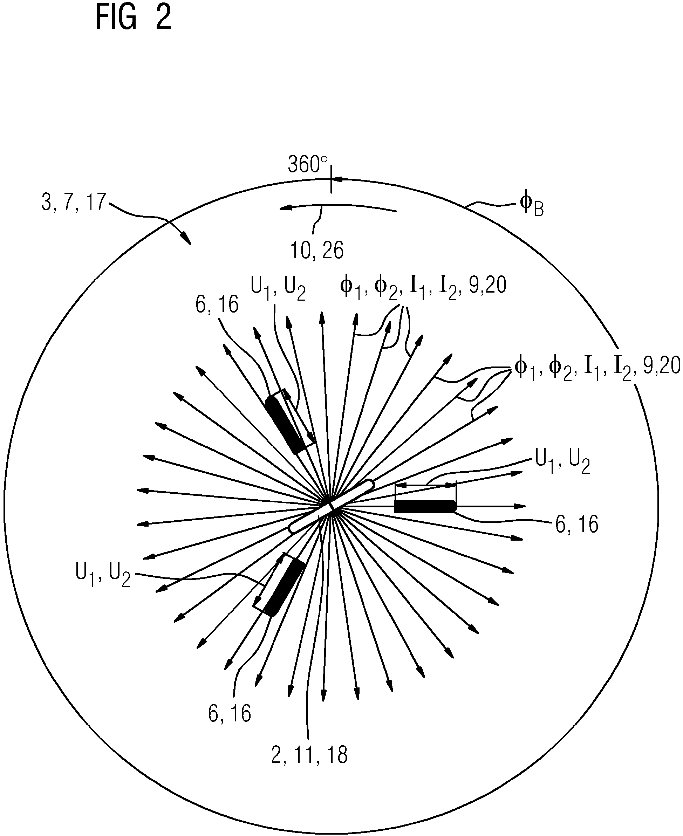

In FIG 2 wird eine schematische Darstellung eines Motormodels aufgezeigt, welches sowohl einen Testmotor 7 im Testbetrieb wie auch einen Einsatzmotor 17 im Normalbetrieb jeweils als Motor 3 für das erfindungsgemäße Temperaturbestimmungsverfahren gemäß FIG 1 beschreibt.

Schematisch sind um Magnete 2 des Motors 2 drei Wicklung, bei Betrachtung des Testmotors 7 drei Testwicklungen 6 bzw. bei Betrachtung des Einsatzmotors 17 drei Motorwicklungen 16, hier im Sinne eines dreiphasigen Drehstrommotors, angeordnet.

Analog zur Beschreibung der FIG 1 werden an diese Wicklungen 6,16 für den Testbetrieb an die Testwicklungen 6 jeweils die erste Spannung U₁ und für den Normalbetrieb an die Motorwicklung 16 jeweils die zweite Spannung U₂ angelegt.

Über einen Winkelbereich φ_{B} von hier 360° wird an den ersten Winkeln φ₁ im Testbetrieb jeweils die erste Spannungszeitfläche 9 in die Testwicklung 6 eingeprägt und jeweils der erste Stromwert I₁ ermittelt. Vergleichbar wird über den Winkelbereich φ_{B} an den zweiten Winkeln φ₂ im Normalbetrieb jeweils die zweite Spannungszeitfläche 20 in die Testwicklung 16 eingeprägt und jeweils der zweite Stromwert I₂ ermittelt.

Die ersten Winkel φ₁ beschreiben ein Testmotordrehfeld 10 als statorfestes elektrisches Drehfeld des Testmotors 7 im Testbetrieb und die zweiten Winkel φ₂ beschreiben ein Motordrehfeld 26 als statorfestes elektrisches Drehfeld des Einsatzmotors 17 im Normalbetrieb.

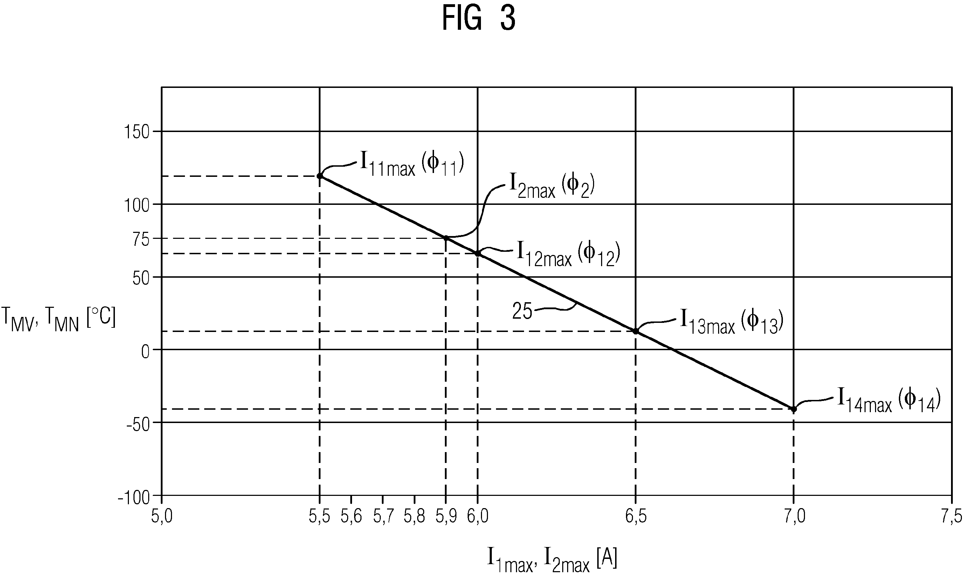

Mit der FIG 3 wird ein schematisches Diagramm zur Ermittlung einer betriebsbedingten Magnettemperatur T_{MN} für das erfindungsgemäße Temperaturbestimmungsverfahren 1gemäß FIG 1 oder 2 dargestellt.

Eine erste Koordinatenachse des Diagramms zeigt die vorgegebene Magnettemperatur T_{MV} und die betriebsbedingte Magnettemperatur T_{MN} als Temperatur in °C aufgetragen über eine zweite Koordinatenachse von ersten maximalen Stromwerten I₁ₘₐₓ und zweiten maximalen Stromwerten I₂ₘₐₓ als Strom in A.

Im Testbetrieb jeweils in Abhängigkeit der vorgegebene Magnettemperatur ermittelte erste maximale Stromwerte I₁ₘₐₓ - maximaler erster Stromwert I₁₁ₘₐₓ, maximaler zweiter Stromwert I₁₂ₘₐₓ, maximaler dritter Stromwert I₁₃ₘₐₓ und maximaler vierter Stromwert I₁₄ₘₐₓ - bilden die Kennlinie 25.

Dazu wurde im Normalbetrieb ein zweiter maximaler Stromwert I₂ₘₐₓ ermittelt, welcher an der Kennlinie 25 gespiegelt wird. Der zweite maximalen Stromwert I₂ₘₐₓ - hier mit 5,9 A - ergibt eine auf der ersten Koordinatenachse ablesbare Temperatur von gezeigt 75°C.

Der maximale erste Stromwert I₁₁ₘₐₓ wurde bei einem ersten Winkelwert φ₁₁ der ersten Winkel φ₁, der maximale zweite Stromwert I₁₂ₘₐₓ bei einem zweiten Winkelwert φ₁₂ der ersten Winkel φ₁, der maximale dritte Stromwert I₁₃ₘₐₓ bei einem dritten Winkelwert φ₁₃ der ersten Winkel φ₁ und der maximale vierte Stromwert I₁₄ₘₐₓ bei einem vierten Winkelwert φ₁₄ der ersten Winkel φ₁ ermittelt.

Der zweite maximale Stromwerten I₂ₘₐₓ wurde bei dem zweiten Winkel φ₂ ermittelt.

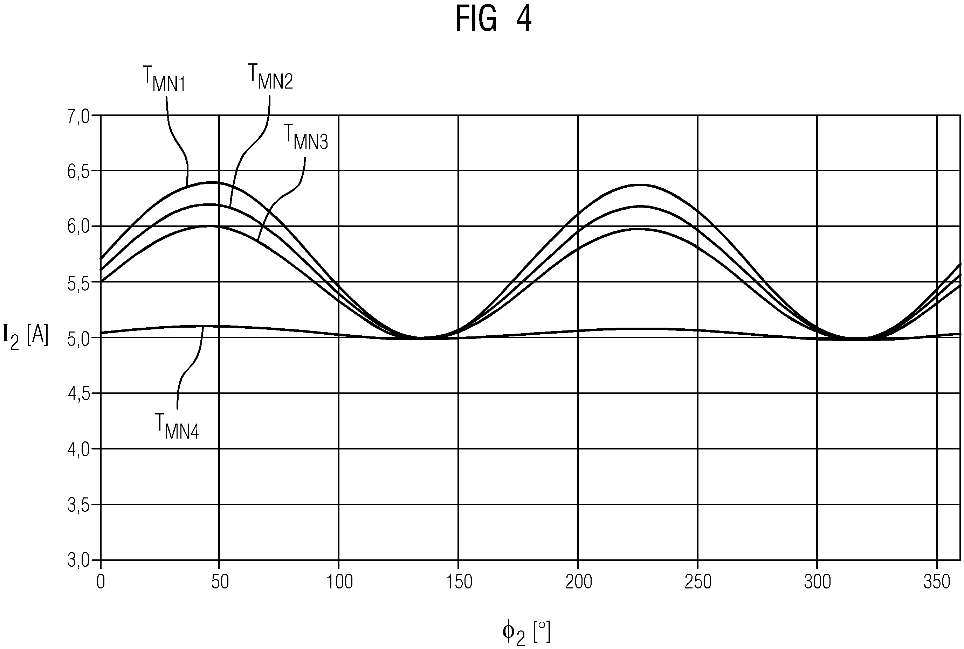

Die FIG 4 zeigt ein schematisches Diagramm mit im Normalbetrieb ermittelten Stromverläufen zweiter Stromwerte I₂ in Abhängigkeit von ermittelten betriebsbedingten Magnettemperaturen T_{MN1}, T_{MN2}, T_{MN3}, T_{MN4}.

Eine erste Koordinatenachse des Diagramms zeigt zweite Stromwerte I₂ als Ströme in A, aufgetragen über eine zweite Koordinatenachse mit zweiten Winkeln φ₂, an denen die zweiten Stromwerte I₂ im Normalbetrieb ermittelt wurden.

Im Ergebnis des Diagramms sind die im Normalbetrieb ermittelten betriebsbedingten Magnettemperatur in Form von Kurven eines Temperaturverlaufs einer ersten betriebsbedingten Magnettemperatur T_{MN1} über einer zweiten betriebsbedingten Magnettemperatur T_{MN2}, einer dritten betriebsbedingten Magnettemperatur T_{MN3} und einer vierten betriebsbedingten Magnettemperatur T_{MN4} aufgezeigt.

Aus der Höhe der Kurvenverläufe der jeweiligen betriebsbedingten Magnettemperaturen T_{MV1}, T_{MV2}, T_{MV3}, T_{MV4} lässt sich bestimmen, von welcher aktuellen Güte der Magnetismus der Motormagnete des Einsatzmotors im Normalbetrieb ist.

So zeigt der Kurvenverlauf der vierten betriebsbedingten Magnettemperatur T_{MN4} einen deutlichen Verlust des Magnetismus bei dieser vierten betriebsbedingten Magnettemperatur T_{MN4}.

## Patentansprüche

1. Temperaturbestimmungsverfahren (1) für Magnettemperaturen an Magneten (2) elektrischer Motoren (3), mit Schritten in einem Testbetrieb (4)
- Anlegung (5) einer ersten Spannung (U₁) an mindestens eine Testwicklung (6) eines Testmotors (7) mit Testmagneten (11) zur Einprägung (8) einer ersten Spannungszeitfläche (9) bei ersten Winkeln (φ₁) eines Testmotordrehfelds (10), wobei die Testmagneten (11) mit zumindest einer vorgegebenen Magnettemperatur (T_{MV}) beaufschlagt sind,
- Ermittlung (12) erster Stromwerte (I₁) bei den ersten Winkeln (φ₁) und
- Speicherung (13) der ersten Stromwerte (I₁) in Abhängigkeit zur zumindest einen vorgegebenen Magnettemperatur (T_{MV}),
und mit Schritten in einem Normalbetrieb (14)
- weitere Anlegung (15) einer zweiten Spannung (U₂) an mindestens eine Motorwicklung (16) eines Einsatzmotors (17) mit Motormagneten (18) zur weiteren Einprägung (19) einer zweiten Spannungszeitfläche (20) bei zweiten Winkeln (φ₂) eines Einsatzmotordrehfelds (26), wobei die Motormagneten (18) eine betriebsbedingte Magnettemperatur (T_{MN}) aufweisen,
- weitere Ermittlung (21) zweiter Stromwerte (I₂) bei den zweiten Winkeln (φ₂),
- weitere Speicherung (22) der zweiten Stromwerte (I₂) in Abhängigkeit zur betriebsbedingten Magnettemperatur (T_{MN}) und
- Temperaturbestimmung (23) der betriebsbedingten Magnettemperatur (T_{MN}) mittels Vergleichs (24) von zumindest einem der zweiten Stromwerte (I₂) der betriebsbedingten Magnettemperatur (T_{MN}) mit zumindest einem der ersten Stromwerte (I₁) der zumindest einen vorgegebenen Magnettemperatur (T_{MV}).

2. Temperaturbestimmungsverfahren (1) nach Anspruch 1, wobei
- aus den ersten Stromwerten (I₁) für die mindestens eine vorgegebene Magnettemperatur (T_{MV}) ein erster maximaler Stromwert (I₁ₘₐₓ) ermittelt und gespeichert wird,
- aus den zweiten Stromwerten (I₂) für die betriebsbedingte Magnettemperatur (T_{MN}) ein zweiter maximaler Stromwert (I₂ₘₐₓ) ermittelt und gespeichert wird und
- die Temperaturbestimmung (23) der betriebsbedingten Magnettemperatur (T_{MN}) mittels Vergleichs (24) des zweiten maximalen Stromwerts (I₂ₘₐₓ) der betriebsbedingten Magnettemperatur (T_{MN}) mit dem ersten maximalen Stromwert (I₁ₘₐₓ) der zumindest einen vorgegebenen Magnettemperatur (T_{MV}) erfolgt.

3. Temperaturbestimmungsverfahren (1) nach Anspruch 2, wobei die betriebsbedingte Magnettemperatur (T_{MN}) gleich der mindestens einen vorgegebenen Magnettemperatur (T_{MV}) ist, wenn der zweite maximale Stromwert (I₂ₘₐₓ) gleich dem ersten maximalen Stromwert (I₁ₘₐₓ) ist.

4. Temperaturbestimmungsverfahren (1) nach Anspruch 2, wobei die betriebsbedingte Magnettemperatur (T_{MN}) zu der mindestens einen vorgegebenen Magnettemperatur (T_{MV}) abgeschätzt wird, wenn der zweite maximale Stromwert (I₂ₘₐₓ) ungleich dem ersten maximalen Stromwert (I₁ₘₐₓ) ist.

5. Temperaturbestimmungsverfahren (1) nach Anspruch 2, wobei aus den jeweils ersten maximalen Stromwerten (I₁ₘₐₓ) mehrerer vorgegebener Magnettemperaturen (T_{MV}) eine Kennlinie (25) gebildet wird und wobei die Temperaturbestimmung (23) der betriebsbedingten Magnettemperatur (T_{MN}) mittels Vergleichs (24) des zweiten maximalen Stromwerts (I₂ₘₐₓ) der betriebsbedingten Magnettemperatur (T_{MN}) mit den jeweils ersten maximalen Stromwerten (I₁ₘₐₓ) der Kennlinie (25) in Abhängigkeit zu den mehreren vorgegebenen Magnettemperaturen (T_{MV}) erfolgt.

6. Temperaturbestimmungsverfahren (1) nach Anspruch 5, wobei die betriebsbedingte Magnettemperatur (T_{MN}) gleich einer der mehreren vorgegebenen Magnettemperaturen (T_{MV}) ist, wenn der zweite maximale Stromwert (I₂ₘₐₓ) gleich einem ersten maximalen Stromwert (I₁ₘₐₓ) der Kennlinie (25) in Abhängigkeit zu einer der mehreren vorgegebenen Magnettemperaturen (T_{MV}) ist.

7. Temperaturbestimmungsverfahren (1) nach Anspruch 5, wobei die betriebsbedingte Magnettemperatur (T_{MN}) zu einer Nächstliegenden der mehreren vorgegebenen Magnettemperaturen (T_{MV}) abgeschätzt wird, wenn der zweite maximale Stromwert (I₂ₘₐₓ) ungleich zu den jeweils ersten maximalen Stromwerten (I₁ₘₐₓ) der Kennlinie (25) in Abhängigkeit zu den mehreren vorgegebenen Magnettemperaturen (T_{MV}) ist.

8. Temperaturbestimmungsverfahren (1) nach einem der vorhergehenden Ansprüche, wobei der Testbetrieb (4) im Stillstand des Testmotors (7) und der Normalbetrieb (14) im Stillstand des Einsatzmotors (17) durchgeführt wird.

9. Temperaturbestimmungsverfahren (1) nach einem der vorhergehenden Ansprüche, wobei die Testmagneten (11) des Testmotors (7) und die Motormagneten (18) des Einsatzmotors (17) als Permanentmagneten ausgebildet sind.

10. Temperaturbestimmungsverfahren (1) nach einem der vorhergehenden Ansprüche, wobei die zweite Spannungszeitfläche (20) im Normalbetrieb (14) gleich der ersten Spannungszeitfläche (9) im Testbetrieb (4) ist.

11. Temperaturbestimmungsverfahren (1) nach einem der vorhergehenden Ansprüche, wobei die ersten Winkel (φ₁) in Anzahl und jeweiligen Winkelwerten gleich den zweiten Winkeln (φ₂) sind.
